(19) Europäisches Patentamt
European Patent Office
Office européen des brevets

(11) EP 0 724 222 A1

(12) **EUROPEAN PATENT APPLICATION**
published in accordance with Art. 158(3) EPC

(43) Date of publication:
**31.07.1996 Bulletin 1996/31**

(21) Application number: **94929657.8**

(22) Date of filing: **13.10.1994**

(51) Int. Cl.$^6$: **G06F 17/30**

(86) International application number:
**PCT/JP94/01722**

(87) International publication number:
**WO 95/10814 (20.04.1995 Gazette 1995/17)**

(84) Designated Contracting States:
**DE FR GB IT**

(30) Priority: **15.10.1993 JP 257977/93**

(71) Applicant: **OMRON CORPORATION**
**Kyoto-shi, Kyoto 616 (JP)**

(72) Inventors:
- **NAKAMURA, Jun**
**Omron Corporation**
**10, Tsuchido-cho**
**Kyoto 616 (JP)**
- **NAKAJIMA, Hiroshi**
**Omron Corporation**
**Ukyo-ku, Kyoto-shi Kyoto 616 (JP)**
- **TAKAHASHI, Masanori**
**Omron Corporation**
**Ukyo-ku, Kyoto-shi Kyoto 616 (JP)**

(74) Representative: **Wilhelms, Rolf E., Dr.**
**WILHELMS, KILIAN & PARTNER**
**Patentanwälte**
**Eduard-Schmid-Strasse 2**
**81541 München (DE)**

# (54) DEVICE AND METHOD FOR PROCESSING FUZZY DATA

(57) A fuzzy data processing apparatus has a database storing data, inclusive of fuzzy data, that are to be retrieved, and a fuzzy data dictionary in which data representing membership functions of the fuzzy data have been stored in correspondence with the fuzzy data, wherein when a search command which includes a search condition containing fuzzy data has been applied, membership function data relating to fuzzy data are read out by referring to the fuzzy data dictionary and a search operation is executed using the membership functions. With regard to fuzzy data not defined in the fuzzy dictionary, a definition regarding the fuzzy data is applied to the search command. This definition is composed of fuzzy data and a membership function representing these fuzzy data. Furthermore, a SET instruction is incorporated in the search command. The fuzzy data processing apparatus executes fuzzy search processing in accordance with the definition included in the search command and registers the definition in the fuzzy data base.

*Fig. 11*

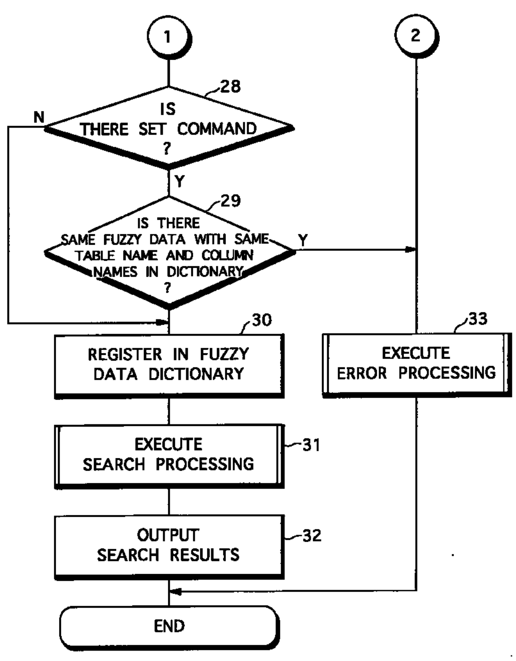


EP 0 724 222 A1

## Description

### Technical Field

This invention relates to a fuzzy data processing apparatus and method, particularly an apparatus and method through which it is possible to conduct a search that allows ambiguity (fuzziness) of data stored in a database and ambiguity of search conditions.

### Background Art

In a fuzzy search, fuzzy data are contained in the database to be searched and/or fuzzy data are contained in the search conditions.

Fuzzy data are stipulated by a fuzzy set and generally are characterized using a membership function. There are various types of fuzzy data, among which numerical-type fuzzy data will be discussed. Numerical-type fuzzy data constitute a fuzzy set in which a numerical value is an element and are expressed by a fuzzy number or a fuzzy label. A fuzzy number is one represented by attaching "about" to it, as in the manner of "about 30". A fuzzy label is a label obtained by expressing a fuzzy set by language. One example that can be mentioned is "young".

In order to arrange it so that fuzzy data can be handled, a fuzzy data processing apparatus comes equipped with a fuzzy data dictionary. The fuzzy data dictionary is obtained by registering data, which relate to membership functions representing fuzzy data, in correspondence with these fuzzy data.

The fuzzy dictionary is referred to when dealing with fuzzy data in a database or fuzzy data described in a search condition. The membership function data representing these fuzzy data are read out of the fuzzy dictionary. An arithmetic operation for fuzzy search processing is performed using this membership function (For example, see International Publication No. WO 93/07575.). The result of this processing or what is obtained by manipulating the same is outputted as the results of the search.

In such a fuzzy search, the fuzzy search cannot be performed if a given search condition contains fuzzy data not registered in the fuzzy data dictionary. In a case such as this, the operator must define the membership function of these fuzzy data and then register the membership function in the fuzzy data dictionary. This operation is troublesome and processing takes time since the fuzzy search must be suspended during this operation.

In order to preclude this situation and improve the efficiency of the fuzzy search, it has been contemplated to register, in advance, membership function data regarding almost all fuzzy data whose use in a fuzzy data dictionary is predicted. However, predicting beforehand almost all fuzzy data that would be used is difficult and, even if this were possible, the number of items of data registered in the fuzzy data dictionary would be too large.

### Disclosure of the Invention

An object of the present invention is to alleviate the difficulty of tasks performed by the operator.

Another object of the present invention is to reduce the possibility that suspension of search processing will be occur.

A further object of the present invention is to arrange it so that only the minimum required amount of fuzzy data need be registered in a fuzzy data dictionary.

A fuzzy data processing apparatus according to the present invention comprises a database in which data to be retrieved are stored, a fuzzy data dictionary in which membership function data representing fuzzy data are stored in correspondence with identification codes of these fuzzy data, search command accepting means for accepting a search command which includes a fuzzy proposition containing paired fuzzy data and membership function data representing these fuzzy data, membership function data acquisition means for obtaining membership function data representing fuzzy data by referring to the fuzzy data dictionary at least in either one of a case where the search command contains separate fuzzy data and a case where the database contains fuzzy data, fuzzy search means for searching the database in accordance with the search command and executing a search operation with regard to data, obtained from the database, using at least one of membership function data obtained by the membership function data acquisition means and membership function data contained in the search command, and registration means for storing, in the fuzzy data dictionary, the paired fuzzy data and membership function data contained in the search command.

In a preferred embodiment, the registration means registers the paired fuzzy data and membership function data upon confirming that the pair do not exist in the fuzzy data dictionary.

The fuzzy data processing apparatus further has means for outputting results of a search conducted by the fuzzy search means.

A fuzzy data processing method according to the present invention comprises the steps of preparing beforehand a database in which data to be retrieved are stored and a fuzzy data dictionary in which membership function data representing fuzzy data are stored in correspondence with identification codes of these fuzzy data, accepting a search command which includes a fuzzy proposition containing paired fuzzy data and membership function data representing these fuzzy data, obtaining membership function data representing fuzzy data by referring to the fuzzy data dictionary at least in either one of a case where the search command contains separate fuzzy data and a case where the database contains fuzzy data, searching the database in accordance with the search command and executing a search operation with regard to data, obtained from the database, using at least one of membership function data obtained by the membership function data acquisition processing and membership function data contained in the search command, and storing, in the fuzzy data dictionary, the paired fuzzy data and membership function data contained in the search command.

The data stored in the database generally would include fuzzy data.

Membership function data representing fuzzy data stand for a membership function. Membership functions are expressed by straight lines, these including triangular-shaped membership functions, which are the simplest, followed by trapezoidal membership functions, etc.. These membership functions generally would be represented by a collection of end-point coordinates of straight lines. Of course, membership functions can be represented using the coordinates of the centers of these shapes or data relating to the length of one side. A membership function can also be expressed by a curve, e.g. a normal distribution function. Such membership function data would be composed of parameters representing the curve.

A search command may be entered by an operator using an input unit or may be generated as by an application program. Accordingly, the search command accepting means may take on various forms, such as an input unit, a program for accepting entered data, a predetermined area of a memory or a program for accepting a command by communication between programs.

A search command contains a search condition constituted by a fuzzy proposition. There may be a case where this search condition is composed of fuzzy data and a relative operator (the fuzzy data in this case are referred to as separate fuzzy data) and a case where the search condition is composed of fuzzy data, a relative operator and the definition of the fuzzy data (these data are membership function data). The latter case corresponds to a fuzzy proposition containing paired fuzzy data and the membership function data thereof.

The details of fuzzy search computations are described in the laid-open publication of the above-mentioned international application.

In accordance with the present invention, the definition of fuzzy data is included in the search condition. This means that a fuzzy data search is possible even if the membership function data regarding the fuzzy data have not been registered in the fuzzy data dictionary in advance. Accordingly, suspension of processing due to the fact that the definition does not exist in the fuzzy data dictionary is reduced and an efficient, rapid fuzzy search becomes possible. If it is deemed necessary, the definition of fuzzy data may be added to a search command in advance. As a result, there is less burden upon the operator in terms of having to define the fuzzy data while processing is in progress. The minimum necessary fuzzy data need only be registered in the fuzzy data dictionary beforehand.

Since the definition of the fuzzy data included in the search command is registered in the fuzzy data dictionary, the content of the fuzzy data dictionary is gradually enriched. The next time the same fuzzy data are used, it would be unnecessary to incorporate the definition of the fuzzy data in the search command.

It would suffice to perform the registration of the definition of the fuzzy data in the fuzzy data dictionary only in a case where a command to this effect has been included in the search command.

The present invention further provides a fuzzy data processing apparatus not possessing registration means.

This fuzzy data processing apparatus comprises a database in which data to be retrieved are stored, a fuzzy data dictionary in which membership function data representing fuzzy data are stored in correspondence with identification codes of these fuzzy data, search command accepting means for accepting a search command which includes a fuzzy proposition containing paired fuzzy data and membership function data representing these fuzzy data, membership function data acquisition means for obtaining membership function data representing fuzzy data by referring to the fuzzy data dictionary at least in either one of a case where the search command contains separate fuzzy data and a case where the database contains fuzzy data, and fuzzy search means for searching the database in accordance with the search command and executing a search operation with regard to data, obtained from the database, using at least one of membership function data obtained by the membership function data acquisition means and membership function data contained in the search command.

In a preferred embodiment, registration means is provided which, when a command for registration of paired fuzzy data and membership function data has been included in the search command, is for registering these data in the fuzzy data dictionary.

The registration means preferably registers the paired fuzzy data and membership function data upon confirming that the pair do not exist in the fuzzy data dictionary.

A fuzzy data processing method devoid of registration processing according to the present invention comprises the steps of preparing beforehand a database in which data to be retrieved are stored and a fuzzy data dictionary in which membership function data representing fuzzy data are stored in correspondence with identification codes of these fuzzy data, accepting a search command which includes a fuzzy proposition containing paired fuzzy data and membership function data representing these fuzzy data, obtaining membership function data representing fuzzy data by referring to the fuzzy data dictionary at least in either one of a case where the search command contains separate fuzzy data and a case where the database contains fuzzy data, and searching the database in accordance with the search command and executing a search operation with regard to data, obtained from the database, using at least one of membership function data obtained by the membership function data acquisition processing and membership function data contained in the search command.

As the definition of fuzzy data is incorporated in the search command, the fuzzy data dictionary may be dispensed with in the most extreme case.

A fuzzy data processing apparatus according to the invention not possessing a fuzzy data dictionary comprises a database in which data to be retrieved are stored, search command accepting means for accepting a search command which includes a fuzzy proposition containing paired fuzzy data and membership function data representing these fuzzy data, and fuzzy search means for searching the database in accordance with the search command and executing a search operation with regard to data, obtained from the database, using the membership function data contained in the search command.

A fuzzy data processing method according to this aspect of the invention comprises the steps of accepting a search command which includes a fuzzy proposition containing paired fuzzy data and membership function data representing these fuzzy data, searching the database in accordance with the search command and executing a search operation with regard to data, obtained from the database, using membership function data contained in the search command.

In this case, the premise is that fuzzy data have not been stored in the database.

In a case where fuzzy data have not been stored in the database, a fuzzy data processing apparatus according to the present invention would be constructed as follows:

Specifically, the fuzzy data processing apparatus comprises a database in which data to be retrieved are stored, a fuzzy data dictionary in which membership function data representing fuzzy data are stored in correspondence with identification codes of these fuzzy data, search command accepting means for accepting a search command which includes a fuzzy proposition containing paired fuzzy data and membership function data representing these fuzzy data, membership function data acquisition means for obtaining membership function data representing fuzzy data by referring to the fuzzy data dictionary in a case where a search command contains separate fuzzy data, and fuzzy search means for searching the database in accordance with the search command and executing a search operation with regard to data, obtained from the database, using at least one of membership function data obtained by the membership function data acquisition means and membership function data contained in the search command.

Preferably, the apparatus is further provided with registration means which, when a command for registration of paired fuzzy data and membership function data has been included in the search command, is for registering these data in the fuzzy data dictionary.

The registration means preferably registers the paired fuzzy data and membership function data upon confirming that the pair do not exist in the fuzzy data dictionary.

A fuzzy data processing method according to this aspect of the invention comprises the steps of preparing beforehand a database in which data to be retrieved are stored and a fuzzy data dictionary in which membership function data representing fuzzy data are stored in correspondence with identification codes of these fuzzy data, accepting a search command which includes a fuzzy proposition containing paired fuzzy data and membership function data representing these fuzzy data, searching the database in accordance with the search command and executing a search operation with regard to data, obtained from the database, using at least one of membership function data obtained by the membership function data acquisition processing and membership function data contained in the search command.

The present invention further provides a search command method.

A first search command method according to the present invention comprises the steps of incorporating at least one fuzzy proposition in a search command, incorporating a search condition, which contains fuzzy data, in the fuzzy proposition, incorporating membership function data representing these fuzzy data in the fuzzy proposition, incorporating a command, which is for registering these fuzzy data and these membership function data as a pair in a fuzzy data dictionary, in the fuzzy proposition, and applying the search command thus created to fuzzy search means.

The above-described fuzzy data processing apparatus and method operate in accordance with the search command thus applied.

A registration command need not necessarily be incorporated in the search command. A second search command method comprises the steps of incorporating at least one fuzzy proposition in a search command, incorporating a search condition, which contains fuzzy data, in the fuzzy proposition, incorporating membership function data representing these fuzzy data in the fuzzy proposition, and applying the search command thus created to fuzzy search means.

## Brief Description of the Drawings

Fig. 1 is a block diagram illustrating the configuration of a fuzzy data processing apparatus;

Fig. 2 shows an example of a database;

Fig. 3 shows part of the constitution of a fuzzy data dictionary;

Fig. 4 is for describing the definition of a membership function;

Fig. 5 is a graph showing a membership function of a fuzzy number "about 30 (years of age)";

Fig. 6 is a graph showing a membership function of a fuzzy label "middle-aged";

Fig. 7 is a graph showing a membership function of a fuzzy label "young";

Fig. 8 is a graph showing a membership function of a fuzzy number "about 3.5 (million yen)";

Fig. 9 is a graph showing a membership function of a fuzzy number "about 4.0 (million yen)";

Figs. 10 and 11 are flowcharts a illustrating search processing procedure;

Fig. 12 illustrates part of an updated fuzzy data dictionary;

Fig. 13 is a graph showing a membership function of a fuzzy number "about 4.0 (million yen)";

Fig. 14 is a graph showing a membership function of "> about 4.0 (million yen)";

Fig. 15 illustrates processing for obtaining degree of membership with regard to income;

Figs. 16 and 17 illustrate processing for obtaining degree of membership with regard to age;

Fig. 18 shows an example of search results; and

Fig. 19 shows an example of search results that have been subjected to threshold-value processing and sorting processing.

Best Mode for Carrying Out the Invention

Fig. 1 illustrates the configuration of a fuzzy data processing apparatus. The fuzzy data processing apparatus most usually is constructed by a computer system. Here a memory device 11, an input unit 12 and an output unit 13 are connected to a computer 10.

The computer 10 is provided with a CPU for executing various processing the foremost of which is fuzzy search processing, described later, a RAM for storing data in various processing inclusive of search processing, and a ROM for storing all or part of various programs executed by the CPU as well as fixed data. The programs for search processing and the like may be stored in a floppy disk or hard disk of the memory device 11. A database and a fuzzy data dictionary may also be provided in the RAM.

The memory device 11 includes a floppy disk or a hard disk and its driver. The memory device 11 may also include an optical disk (inclusive of a magneto-optical disk), a RAM or a ROM, etc.. The database and fuzzy data dictionary are stored in the memory device 11.

The input unit 12, which is for entering data registered in the database or fuzzy data dictionary, as well as search conditions (search commands), is constituted by a keyboard, a mouse and a display device which displays guidance for input operation or the like in cooperation with the keyboard and mouse.

The output unit 12, which includes a display device or printer, outputs (e.g., displays) entered search conditions, search results, etc..

Fig. 2 illustrates part of the database provided in the memory device 11.

A table name and column names are used to classify the data in the database. The table name indicates the major classification and the column names indicate the minor classifications. One or a plurality of minor classifications belong to one table name. In Fig. 2, the table name is "Young People" and the column names are "Name", "Income" and "Age". The data in these column names are stored in mutually correlated form. For example, the income of a person having the name "ABcd" is "About 3.5 (million yen)", and the age is "22 (years old)".

The database contains fuzzy data in addition to crisp data. Definite numerical values such as 4.1 (million yen) and 3.8 (million yen) under "Income" are crisp data. "About 3.5 (million yen)", "About 30 (years old)" and "Middle-aged", etc., are fuzzy data, as mentioned above.

Fig. 3 shows part of the structure of a fuzzy data dictionary.

The fuzzy data dictionary defines fuzzy data. Table names and column names are used for the purpose of classification in a fuzzy data dictionary as well. The structure of the dictionary is such that column names can be traced (by pointers) from the table names to which they belong and fuzzy labels (or fuzzy numbers) can be traced (by pointers) from the column names to which they belong.

For example, the table name "Young People" includes the column names "Age", "Income", etc.. The column name "Age" includes the fuzzy number "About 30 (years old)" and the fuzzy label "Middle-aged", and the column name "Income" includes the fuzzy numbers "About 3.5 (million yen)" and "About 4.0 (million yen)", etc..

The table name of the data to be searched in the database and membership functions for the fuzzy data dictionary belonging to the same table name are used. For example, in a case where data itemized so as to belong to the table name "Young People" are searched in the database, use is made of membership functions of the fuzzy data registered so as to belong to the table name "Young People" in the fuzzy data dictionary.

The fuzzy labels and fuzzy numbers used in the database are registered in the fuzzy data dictionary, as well as data x1, x2, x3 and x4 representing the membership functions which characterize the fuzzy labels and fuzzy numbers used by a search condition (search command) (where the fuzzy labels and fuzzy numbers would be those used generally or those used in the past, etc.), with x1, x2, x3 and x4 being registered to correspond to the fuzzy labels or fuzzy numbers. As will become clear later, the data x1 ~ x4 representing membership functions can be registered in the fuzzy data dictionary along with the fuzzy labels and fuzzy numbers by means of a search command.

As shown in Fig. 4, a membership function is in principle expressed by a trapezoid. The membership function of the trapezoid is defined as follows by the above-mentioned data x1, x2, x3 and x4: The coordinates of the left end of the base of the trapezoid are (x1,0), the coordinates of the left end of the upper side are (x2,1), the coordinates of the right end of the upper side are (x3,1), and the coordinates of the right end of the base are (x4,0). The membership function has a shape obtained by connecting the six points (-∞, 0) or (0,0), (x1,0), (x2,1), (x3,1), (x4,0), (∞,0) in a two-dimensional plane in which the horizontal axis is taken as the X axis and the vertical axis is taken as an axis representing grade. It should be noted that $x1 \leqq x2 \leqq x3 \leqq x4$ holds true. This membership function is expressed as follows:

$$NMF\ (x1,x2,x3,x4)$$

where NMF is a function defining the shape of the membership function.

In the fuzzy data dictionary, the membership function data of the fuzzy number "About 30 (years old)" are (x1,x2,x3,x4) = (28, 30, 30, 45). At x2 = x3 = 30, the left end and right end of the upper side of the trapezoid are identical points. Accordingly, the membership function is triangular, as shown in Fig. 5.

The membership function of the fuzzy label "Middle-aged" is NFM (30, 35, 45, 50) and is trapezoidal, as illustrated in Fig. 6.

The membership function of the fuzzy label "Young" registered by a search command, illustrated later, is NFM (0, 0, 20, 30). Here x1 = x2 holds and the membership function is as shown in Fig. 7.

The membership functions of the fuzzy numbers "About 3.5 (million yen)" and "About 4.0 (million yen)" are illustrated in Figs. 8 and 9, respectively. Both of these are trapezoids.

Figs. 10 and 11 illustrate the procedure of search processing executed by the CPU 10. The search processing begins in response to application of a search command. The search command is provided by the program which receives the search command from the input unit 12 or from another application program.

A case in which the following search command has been applied will be described:

"SELECT name FROM young people WHERE income > about 4.0 AND age = (SET young NMF (0, 0, 20, 30))"

This has been written using SQL, where SQL = Structured Query Language.

In this search command, the identifier following the keyword SELECT is the column name ("Name") of the database, and the identifier following the keyword FROM is the table name ("Young People").

A logical expression consisting of a (fuzzy) proposition comprising a set of a column name, relative operator and value, or constructed by combining a plurality of (fuzzy) propositions using logical operators is written after the keyword WHERE. The "values" are crisp data or fuzzy data.

In the above-mentioned SQL search command, "income > about 4.0" is a fuzzy proposition. Further, "income" is the column name, ">" is the relative operator, and "about 4.0" is the fuzzy number (value).

"Age = (SET young NMF (0, 0, 20, 30))" also is a fuzzy proposition. "Age" is the column name, "=" is the relative operator and "(SET young NMF (0, 0, 20, 30)" is the fuzzy label (values) to which the membership function designating function is attached.

Thus, an important feature is that the defining function of a membership function representing fuzzy data is attached to the fuzzy data, which is described as a value in a fuzzy proposition. "SET" represents an instruction which commands that something be registered in the fuzzy data dictionary. "Young" is fuzzy data (a fuzzy label) (values), the definition of which is given by "NMF (0, 0, 20, 30)". In other words, the instruction "SET" commands that the membership function "NMF (0, 0, 20, 30)" be registered in the fuzzy data dictionary with regard to the fuzzy label "young".

The "AND" connecting the two fuzzy propositions is the logical operator. Accordingly, the above-mentioned search command includes a fuzzy logical expression obtained by combining the two fuzzy propositions by the logical operator "AND".

When the search command expressed by the above-mentioned SQL is expressed in natural language, we have the following:

"In the database, select the 'name' of the person satisfying the search condition below from the table having the table name 'Young People'.

The search condition is that 'income' is higher than 'about 4.0 (million yen)' and "age" is equal to the fuzzy label 'young' having the membership function defined by the function NMF (0, 0, 20, 30).

Further, register the membership function NMF (0, 0, 20, 30) representing the fuzzy label 'young' in the fuzzy data dictionary."

When such a search command is applied, first the search command is subjected to phraseology analysis processing (step 21) and grammar analysis processing (step 22) in Fig. 10.

In phraseology analysis processing, the search command is split up into its smallest units (the keyword "SELECT", the identifier "name", etc.), which are referred to as "tokens". On the basis of the results of processing, it is recognized in the grammar analysis processing that the type of processing is an inquiry and that the table name to be processed is "Young People".

Next, it is determined whether the table name "Young People" or column names "Name", "Income" and "Age" described in the search command exist in the database (step 23). If even at least one of the these, i.e., table name or column names, does not exist, the search cannot be conducted and, hence, a display to this effect is presented on the display unit (or an output to this effect is produced by the printer) (step 33).

If the table name and column names of the search command are present, then it is determined whether fuzzy data (with the exception of that to which a SET command is attached) have been described in the search condition (step 24). If there are fuzzy data, then it is necessary to refer to a fuzzy data dictionary in order to interpret the data. If there are no fuzzy data, then referring to the fuzzy data dictionary is unnecessary.

Since the above-mentioned search command (search condition) contains the fuzzy data (fuzzy number) "About 4.0" (column name: Income), the column name "Income" is traced from the table name "Young People" in the fuzzy data dictionary shown in Fig. 3, and the column name "Income" leads to the fuzzy number "About 4.0 (million yen)". When the membership function data regarding the fuzzy number "About 4.0" is found, a "YES" decision is obtained at step 25. If the fuzzy data in the search command cannot be found in the fuzzy data dictionary, then the search cannot be conducted and, hence, an output to this effect is produced (error processing at step 33).

Thus, when membership function data regarding fuzzy data are found in the fuzzy data dictionary, these membership function data are read out and saved temporarily in a RAM (step 26).

The processing of steps 25, 26 is repeated with regard to all of the fuzzy data described in the search command (search condition) (step 27).

Next, it is determined whether the SET command is present in the search command (search condition) (step 28). If the SET command exists, registration of the membership function data in the fuzzy data dictionary is necessary; otherwise, registration processing is unnecessary.

In registration processing, first the fuzzy data dictionary is searched (step 29) using as a key the table name ("Young People"), the column name ("Age") and the fuzzy label name (fuzzy number name) ("Young") whose registration has been commanded. If a membership function of the same fuzzy label name (fuzzy number name) already exists for a table name and column names the same as those whose registration has been commanded by the SET command, registration is unnecessary (the SET command is erroneous). In this case, therefore, notification of this fact is given (step 33). Since a fuzzy search is possible in the present case, the program returns to step 26, membership function data are obtained from the fuzzy data dictionary and search processing may be continued.

If the fuzzy label name (fuzzy number name) for which SET has been commanded does not exist in the fuzzy data dictionary, then this fuzzy label name (fuzzy number name) and membership function data are registered (step 30).

Fig. 12 shows the manner in which NMF (0, 0, 20, 30) has been registered with regard to the fuzzy label "young". This figure indicates the table accessed by the column name "Age" in Fig. 3. If necessary, registration of the column name in a column name table may also be carried out (Since the column name "Age" already exists, registration is not required in this example.).

Of course, membership function data that have been registered are also saved in the RAM for the sake of the ensuing search processing. It goes without saying that registration processing is repeated if there are a plurality of SET commands.

Processing for registering membership function data based upon a SET command may be performed after search processing (step 31), which is described next.

The search processing (step 31) will be described to the extent necessary to understand the invention. For more details, see the above-mentioned international publication.

As mentioned above, the search condition is formed by an AND union between two fuzzy propositions. The first fuzzy instruction is "Income > about 4.0 (million)".

The membership function data representing the fuzzy label "about 4.0 (million yen)" has already been obtained. This membership function is illustrated again in Fig. 13.

On account of the relative operator (the inequality symbol) ">", a new membership function expressing "> about 4.0" is created, as shown in Fig. 14. This is created by assigning the grade 1 to values of x greater than the point x3.

The degree of membership of each item of data in the column name "Income" in the database (Fig. 2) is calculated using the membership function thus newly created.

Data relating to a first income is the fuzzy number "about 3.5 (million yen)". Data representing the membership function of this fuzzy number "about 3.5 (million yen)" are obtained from the fuzzy data dictionary. This is obtained by accessing the column name "Income" from the table name "Young People" and accessing the fuzzy number "about 3.5 (million yen)" from the column name "Income" in the fuzzy data dictionary. If the membership function data of the fuzzy number "about 3.5 (million yen)" are not obtained, search processing cannot be executed and the program proceeds to error processing as a consequence.

With reference to Fig. 15, a MIN-MAX operation is performed between the membership function "> about 4.0 (million yen)" and the membership function "about 3.5 (million yen)". The membership function "> about 4.0" is indicated by the solid line and the membership function "about 3.5" is indicated by the dashed line. The portion (indicated by the shading) at which these membership functions overlap represents the result of the MIN operation. The grade of 0.63 at the position of the maximum value of the result of the MIN operation, i.e., at the position of the apex of the triangle indicated by the shading, is the result of MAX-MIN operation. The degree of membership of the fuzzy number "> about 3.5 (million yen)" is 0.63.

The data from the second onward, namely "4.1 (million yen)", "3.8 (million yen)", 5.5 (million yen)" and 7.0 (million yen)" are all crisp numbers. In this case, the function values obtained when these crisp numbers are adopted as the variables in the membership function "> about 4.0 (million yen)" are the degrees of membership of these crisp values. With reference to Fig. 15, the degrees of membership of these crisp numbers are 1.0, 0.75, 1.0 and 1.0, respectively.

The second fuzzy proposition is "Age = young" (the SET command is considered excluded).

Since the relative operator is "=" (an equal symbol), the membership function of the fuzzy label "young" shown in Fig. 7 is used as is. The degree of membership of each item of data in the column name "Age" in the database (Fig. 2) is calculated using this membership function "young".

Since the first through third items of data "22 (years old)", "25 (years old)" and "23 (years old)" are all crisp values, the function values of the membership function "young" obtained when these crisp numbers are adopted as the variables are the degrees of membership of these crisp values. These degrees of membership are 0.8, 0.5 and 0.7, as shown in Figs. 16 and 17.

The fourth item of data is the fuzzy number "about 30 (years old)", and the fifth item of data is the fuzzy label "middle-aged". The fuzzy data dictionary is referred to with regard to these data and membership function data representing these are obtained. A MIN-MAX operation (see Fig. 16) is performed between the membership function "young" and the membership function "about 30 (years old)", and a MIN-MAX operation (see Fig. 17) is performed between the membership function "young" and the membership function "middle-aged". The results of these MIN-MAX operations are 0.17 and 0.0, respectively.

The two fuzzy propositions mentioned above are connected by the logical operator "AND". The MIN operation is performed in accordance with the logical operator "AND".

Fig. 18 illustrates, in the form of a table, the degrees of membership obtained in accordance with the first fuzzy proposition, the degrees of membership obtained in accordance with the second fuzzy proposition, and the results of the MIN operations between these (select a small degree of membership), these values being shown in correspondence with the names in the database of Fig. 2.

The results of the MIN operations are eventually outputted (displayed on the display unit or printed out by the printer) along with the names as the results of the search (step 32). If necessary, the table shown in Fig. 18 inclusive of the degrees of membership may be outputted.

Alternatively, the names and results of the MIN operations (along with the degrees of membership) are outputted solely with regard to MIN operational results above a predetermined threshold value. In this case, it is preferred that the output be provided upon sorting the MIN operational results in order of decreasing value. Fig. 19 illustrates search results sorted with 0.5 serving as a threshold value.

## Claims

1. A fuzzy data processing apparatus comprising:

   a database in which data to be retrieved are stored;

   a fuzzy data dictionary in which membership function data representing fuzzy data are stored in correspondence with identification codes of these fuzzy data;

   search command accepting means for accepting a search command which includes a fuzzy proposition containing paired fuzzy data and membership function data representing these fuzzy data;

   membership function data acquisition means for obtaining membership function data representing fuzzy data by referring to the fuzzy data dictionary at least in either one of a case where the search command contains separate fuzzy data and a case where said database contains fuzzy data;

   fuzzy search means for searching said database in accordance with said search command and executing a search operation with regard to data, obtained from said database, using at least one of membership function data obtained by said membership function data acquisition means and membership function data contained in said search command; and

   registration means for storing, in said fuzzy data dictionary, the paired fuzzy data and membership function data contained in said search command.

2. A fuzzy data processing apparatus according to claim 1, wherein said registration means registers said paired fuzzy data and membership function data upon confirming that the pair do not exist in said fuzzy data dictionary.

3. A fuzzy data processing apparatus according to claim 1, further comprising means for outputting results of a search conducted by said fuzzy search means.

4. A fuzzy data processing apparatus comprising:

   a database in which data to be retrieved are stored;

   a fuzzy data dictionary in which membership function data representing fuzzy data are stored in correspondence with identification codes of these fuzzy data;

   search command accepting means for accepting a search command which includes a fuzzy proposition containing paired fuzzy data and membership function data representing these fuzzy data;

   membership function data acquisition means for obtaining membership function data representing fuzzy data by referring to the fuzzy data dictionary at least in either one of a case where the search command contains separate fuzzy data and a case where said database contains fuzzy data; and

fuzzy search means for searching the database in accordance with said search command and executing a search operation with regard to data, obtained from said database, using at least one of membership function data obtained by said membership function data acquisition means and membership function data contained in said search command.

**5.** A fuzzy data processing apparatus according to claim 4, further comprising registration means which, when a command for registration of said paired fuzzy data and membership function data has been included in said search command, is for registering these data in said fuzzy data dictionary.

**6.** A fuzzy data processing apparatus according to claim 5, wherein said registration means registers said paired fuzzy data and membership function data upon confirming that the pair do not exist in said fuzzy data dictionary.

**7.** A fuzzy data processing apparatus comprising:

a database in which data to be retrieved are stored;

search command accepting means for accepting a search command which includes a fuzzy proposition containing paired fuzzy data and membership function data representing these fuzzy data; and

fuzzy search means for searching said database in accordance with said search command and executing a search operation with regard to data, obtained from said database, using the membership function data contained in said search command.

**8.** A fuzzy data processing apparatus comprising:

a database in which data to be retrieved are stored;

a fuzzy data dictionary in which membership function data representing fuzzy data are stored in correspondence with identification codes of these fuzzy data;

search command accepting means for accepting a search command which includes a fuzzy proposition containing paired fuzzy data and membership function data representing these fuzzy data;

membership function data acquisition means for obtaining membership function data representing fuzzy data by referring to the fuzzy data dictionary a case where the search command contains separate fuzzy data; and

fuzzy search means for searching said database in accordance with said search command and executing a search operation with regard to data, obtained from said database, using at least one of membership function data obtained by said membership function data acquisition means and membership function data contained in said search command.

**9.** A fuzzy data processing apparatus according to claim 8, further comprising registration means which, when a command for registration of said paired fuzzy data and membership function data has been included in said search command, is for registering these data in said fuzzy data dictionary.

**10.** A fuzzy data processing apparatus according to claim 9, wherein said registration means registers said paired fuzzy data and membership function data upon confirming that the pair do not exist in said fuzzy data dictionary.

**11.** A fuzzy data processing method comprising the steps of:

preparing beforehand a database in which data to be retrieved are stored and a fuzzy data dictionary in which membership function data representing fuzzy data are stored in correspondence with identification codes of these fuzzy data;

accepting a search command which includes a fuzzy proposition containing paired fuzzy data and membership function data representing these fuzzy data;

obtaining membership function data representing fuzzy data by referring to said fuzzy data dictionary at least in either one of a case where the search command contains separate fuzzy data and a case where said database contains fuzzy data;

searching said database in accordance with said search command and executing a search operation with regard to data, obtained from said database, using at least one of membership function data obtained by said membership function data acquisition processing and membership function data contained in said search command; and

storing, in said fuzzy data dictionary, the paired fuzzy data and membership function data contained in said search command.

**12.** A fuzzy data processing method according to claim 11, wherein said paired fuzzy data and membership function data are registered upon confirming that the pair do not exist in said fuzzy data dictionary.

**13.** A fuzzy data processing method according to claim 11, wherein search results are outputted.

**14.** A fuzzy data processing method comprising the steps of:

preparing beforehand a database in which data to be retrieved are stored and a fuzzy data dictionary in which membership function data representing fuzzy data are stored in correspondence with identification codes of these fuzzy data;

accepting a search command which includes a fuzzy proposition containing paired fuzzy data and membership function data representing these fuzzy data;

obtaining membership function data representing fuzzy data by referring to said fuzzy data dictionary at least in either one of a case where the search command contains separate fuzzy data and a case where said database contains fuzzy data; and

searching said database in accordance with said search command and executing a search operation with regard to data, obtained from said database, using at least one of membership function data obtained by said membership function data acquisition processing and membership function data contained in said search command.

**15.** A fuzzy data processing method according to claim 14, wherein when a command for registration of said paired fuzzy data and membership function data has been included in said search command, these data are registered in said fuzzy data dictionary.

**16.** A fuzzy data processing method according to claim 15, wherein said paired fuzzy data and membership function data are registered upon confirming that the pair do not exist in said fuzzy data dictionary.

**17.** A fuzzy data processing method comprising the steps of:

accepting a search command which includes a fuzzy proposition containing paired fuzzy data and membership function data representing these fuzzy data; and

searching the database in accordance with said search command and executing a search operation with regard to data, obtained from said database, using membership function data contained in said search command.

**18.** A fuzzy data processing method comprising the steps of:

preparing beforehand a database in which data to be retrieved are stored and a fuzzy data dictionary in which membership function data representing fuzzy data are stored in correspondence with identification codes of these fuzzy data;

accepting a search command which includes a fuzzy proposition containing paired fuzzy data and membership function data representing these fuzzy data;

obtaining membership function data representing fuzzy data by referring to said fuzzy data dictionary a case where the search command contains separate fuzzy data; and

searching said database in accordance with said search command and executing a search operation with regard to data, obtained from said database, using at least one of membership function data obtained by said membership function data acquisition processing and membership function data contained in said search command.

**19.** A fuzzy data processing method according to claim 18, wherein when a command for registration of said paired fuzzy data and membership function data has been included in said search command, these data are registered in said fuzzy data dictionary.

**20.** A fuzzy data processing method according to claim 19, wherein said paired fuzzy data and membership function data are registered upon confirming that the pair do not exist in said fuzzy data dictionary.

**21.** A search command method comprising the steps of:

incorporating at least one fuzzy proposition in a search command;

incorporating a search condition, which contains fuzzy data, in the fuzzy proposition, incorporating membership function data representing said fuzzy data in the fuzzy proposition, and incorporating a command, which is for registering said fuzzy data and said membership function data as a pair in a fuzzy data dictionary, in the fuzzy proposition; and

applying said search command thus created to fuzzy search means.

**22.** A search command method comprising the steps of:

incorporating at least one fuzzy proposition in a search command;

incorporating a search condition, which contains fuzzy data, in the fuzzy proposition, and incorporating membership function data representing said fuzzy data in the fuzzy proposition; and

applying said search command thus created to fuzzy search means.

Fig. 1

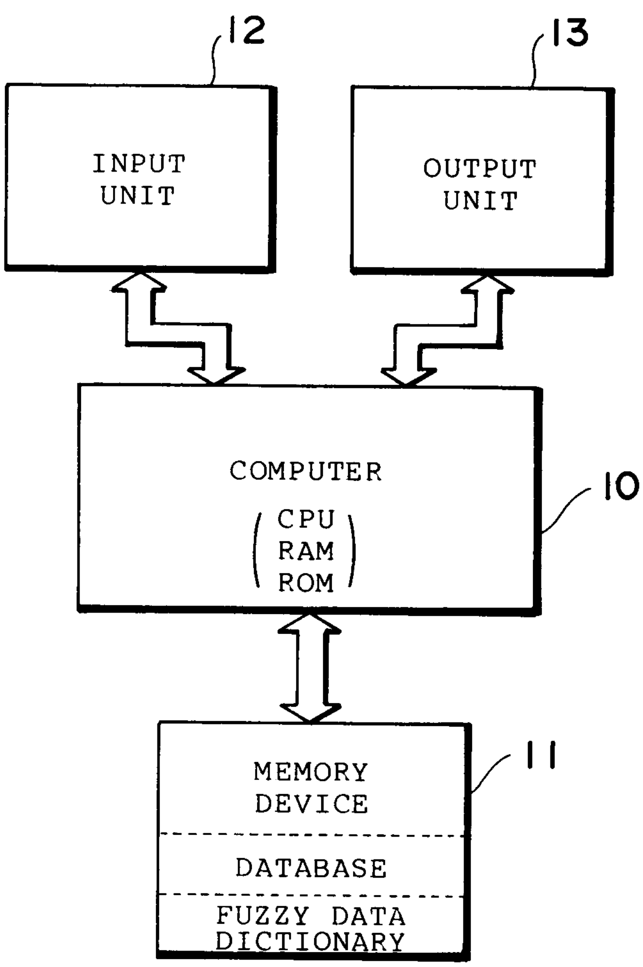
12
13
INPUT UNIT
OUTPUT UNIT
COMPUTER
(CPU RAM ROM)
10
MEMORY DEVICE
DATABASE
FUZZY DATA DICTIONARY
11

*Fig.2*

TABLE NAME: YOUNG PEOPLE

| NAME | INCOME | AGE |
|---|---|---|
| AB cd | ABOUT 3.5 MILLION YEN | 22 YEARS OLD |
| AC de | 4.1 MILLION YEN | 25 YEARS OLD |
| CF ef | 3.8 MILLION YEN | 23 YEARS OLD |
| DA dc | 5.5 MILLION YEN | ABOUT 30 YEARS OLD |
| FG fg | 7.0 MILLION YEN | MIDDLE-AGED |
| | | |

Fig. 3

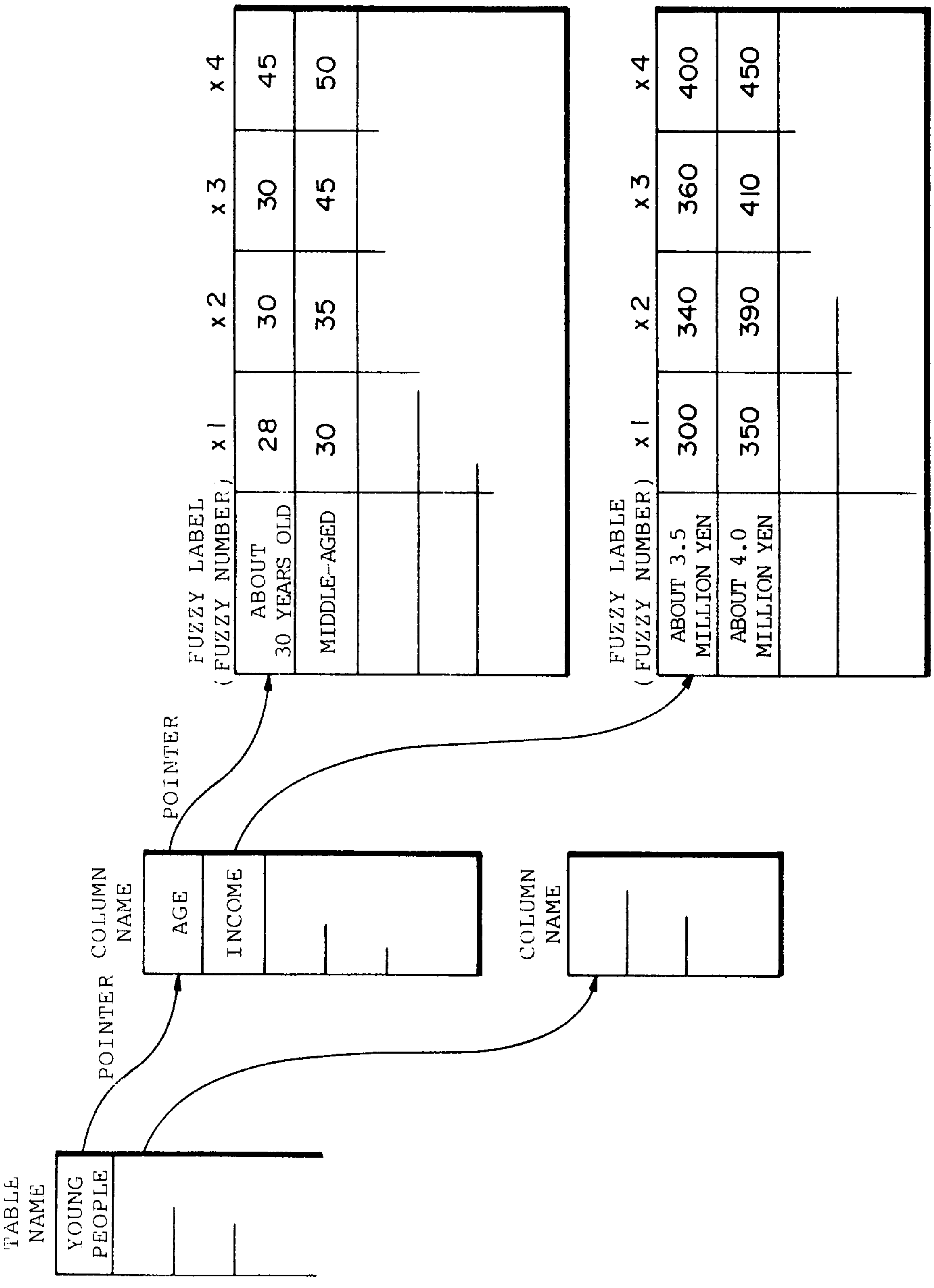
TABLE NAME
YOUNG PEOPLE
POINTER
COLUMN NAME
AGE
INCOME
POINTER
FUZZY LABEL (FUZZY NUMBER)
x 1
x 2
x 3
x 4
ABOUT 30 YEARS OLD
28
30
30
45
MIDDLE-AGED
30
35
45
50
COLUMN NAME
FUZZY LABLE (FUZZY NUMBER)
x 1
x 2
x 3
x 4
ABOUT 3.5 MILLION YEN
300
340
360
400
ABOUT 4.0 MILLION YEN
350
390
410
450

*Fig. 4*

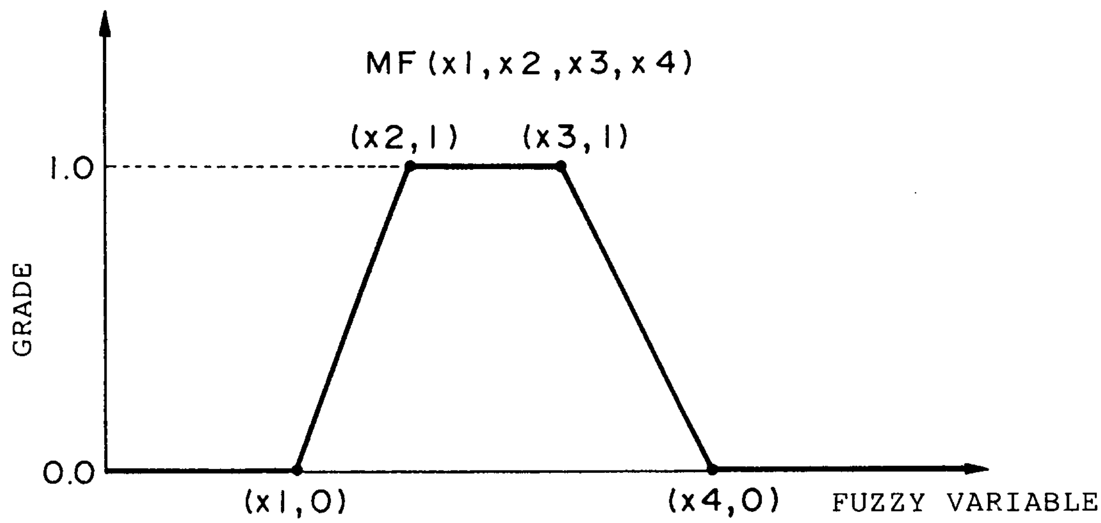
MF (x1, x2, x3, x4)
(x2, 1)
(x3, 1)
1.0
GRADE
0.0
(x1, 0)
(x4, 0)
FUZZY VARIABLE

*Fig. 5*

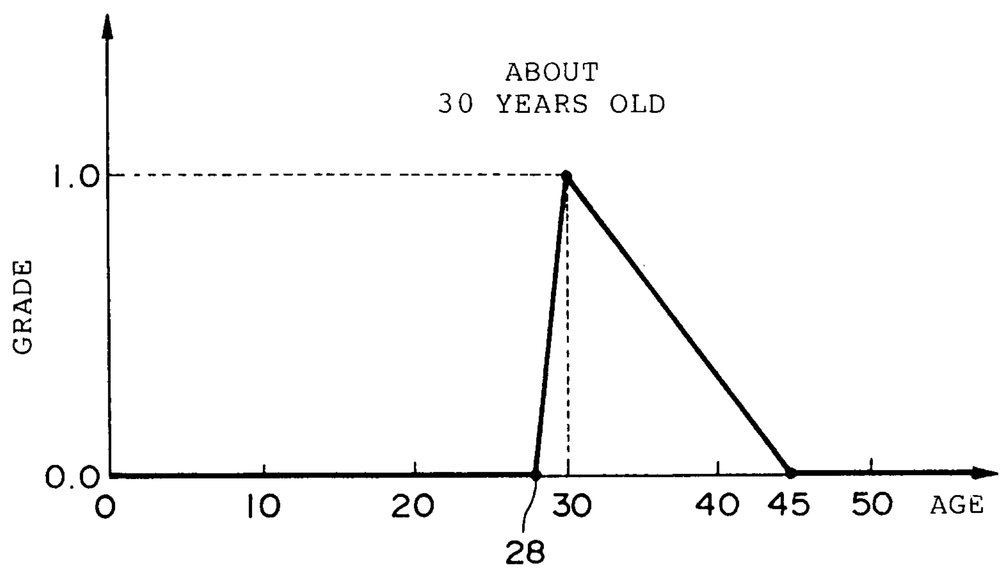
ABOUT
30 YEARS OLD
1.0
GRADE
0.0
0
10
20
30
40
45
50
AGE
28

Fig.6

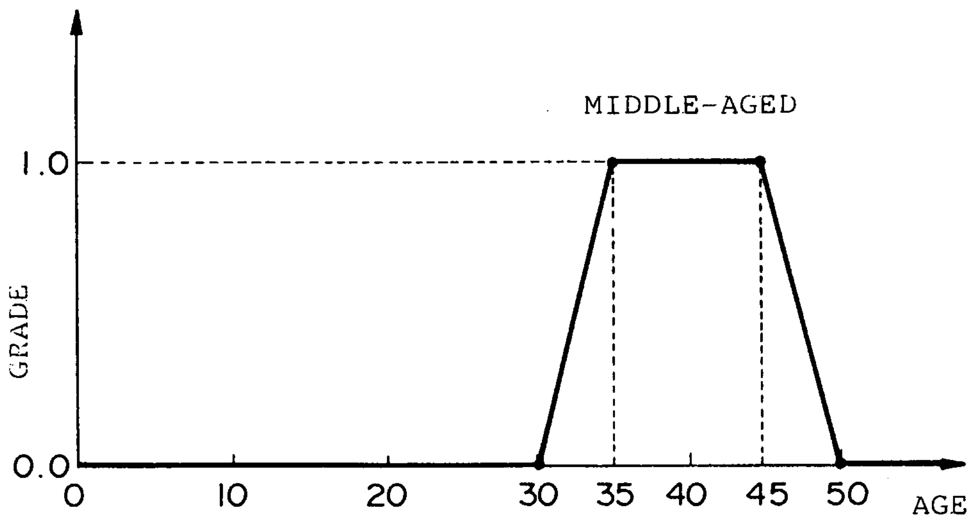
MIDDLE-AGED
1.0
GRADE
0.0
0
10
20
30
35
40
45
50
AGE

Fig.7

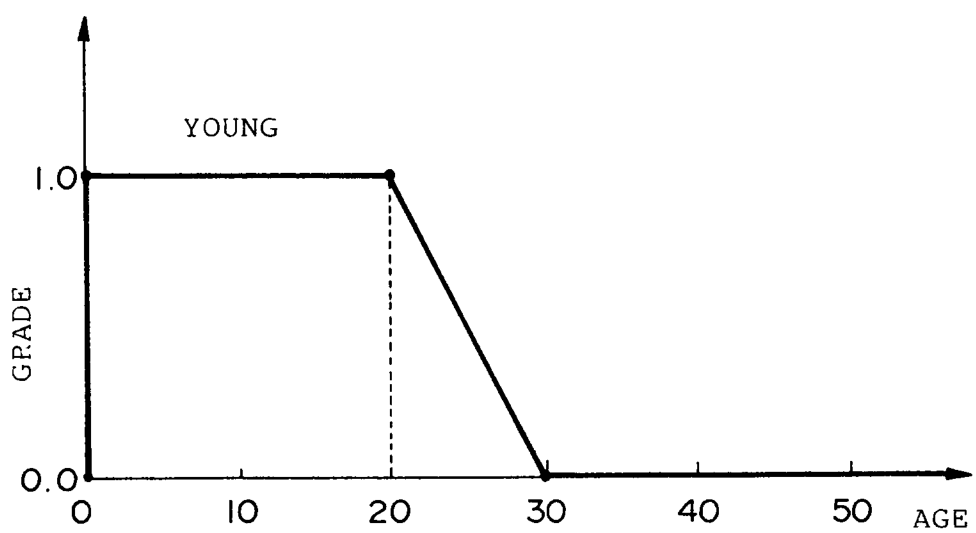
YOUNG
1.0
GRADE
0.0
0
10
20
30
40
50
AGE

*Fig. 8*

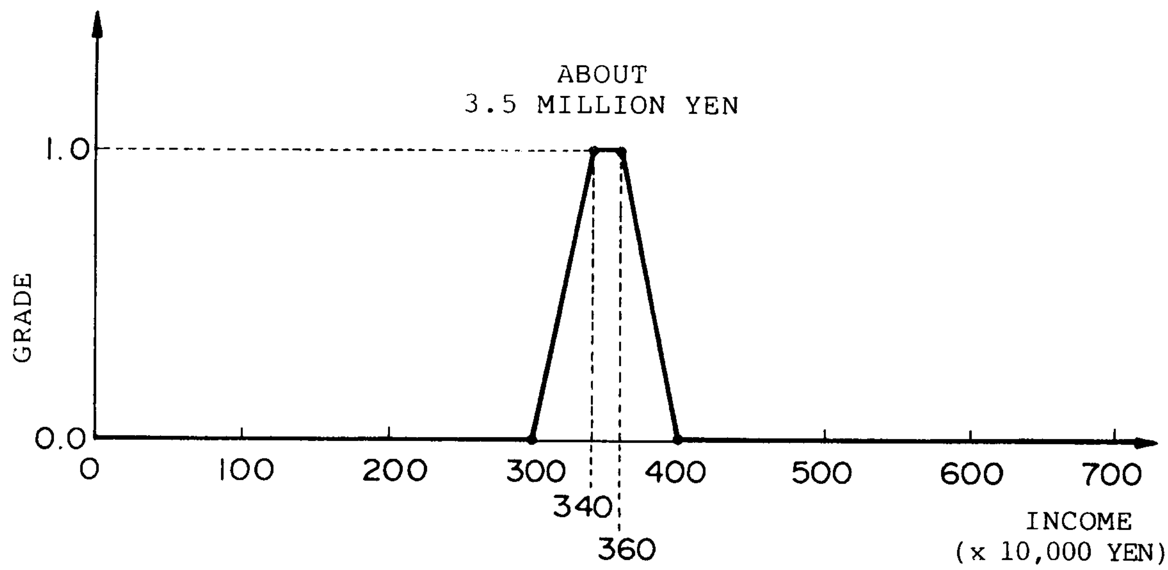
ABOUT
3.5 MILLION YEN
1.0
GRADE
0.0
0
100
200
300
400
500
600
700
340
360
INCOME
(x 10,000 YEN)

*Fig. 9*

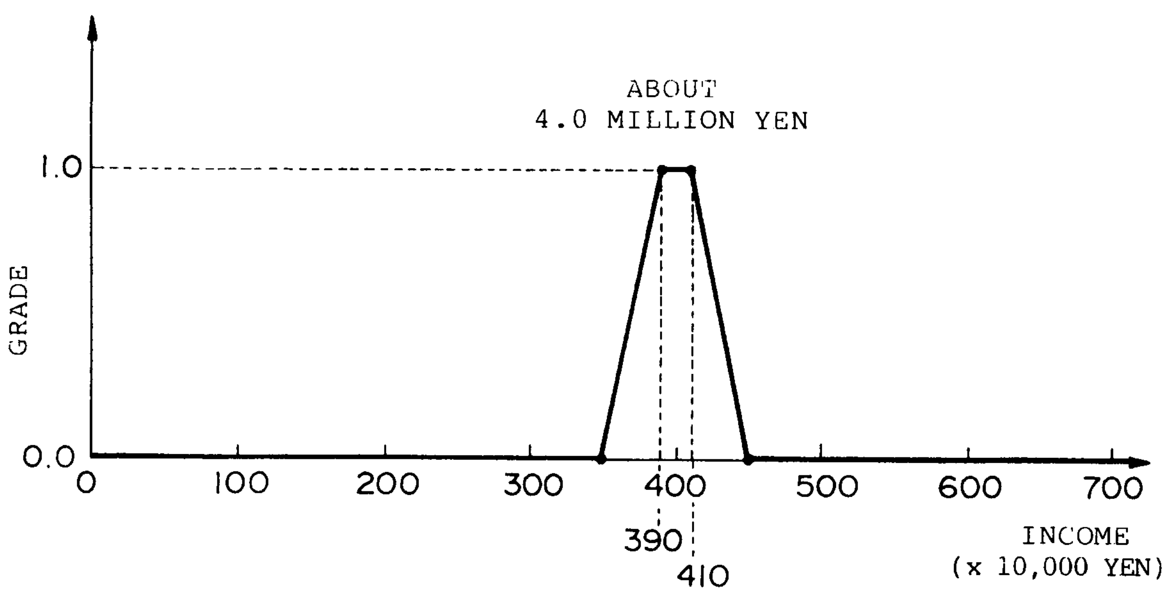
ABOUT
4.0 MILLION YEN
1.0
GRADE
0.0
0
100
200
300
400
500
600
700
390
410
INCOME
(x 10,000 YEN)

Fig. 10

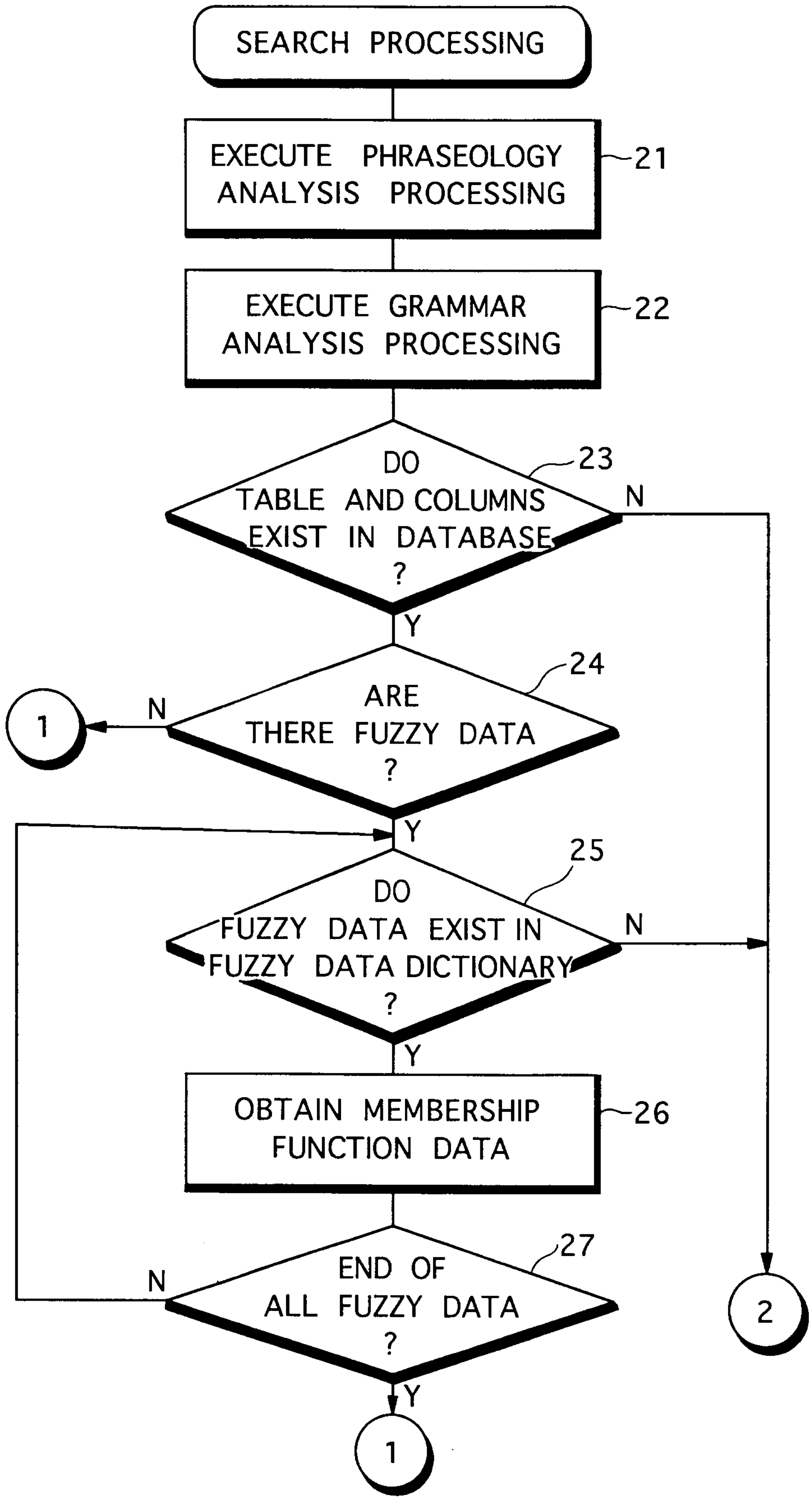
SEARCH PROCESSING
EXECUTE PHRASEOLOGY ANALYSIS PROCESSING
21
EXECUTE GRAMMAR ANALYSIS PROCESSING
22
DO TABLE AND COLUMNS EXIST IN DATABASE ?
23
N
Y
ARE THERE FUZZY DATA ?
24
N
1
Y
DO FUZZY DATA EXIST IN FUZZY DATA DICTIONARY ?
25
N
Y
OBTAIN MEMBERSHIP FUNCTION DATA
26
END OF ALL FUZZY DATA ?
27
N
Y
1
2

Fig.11

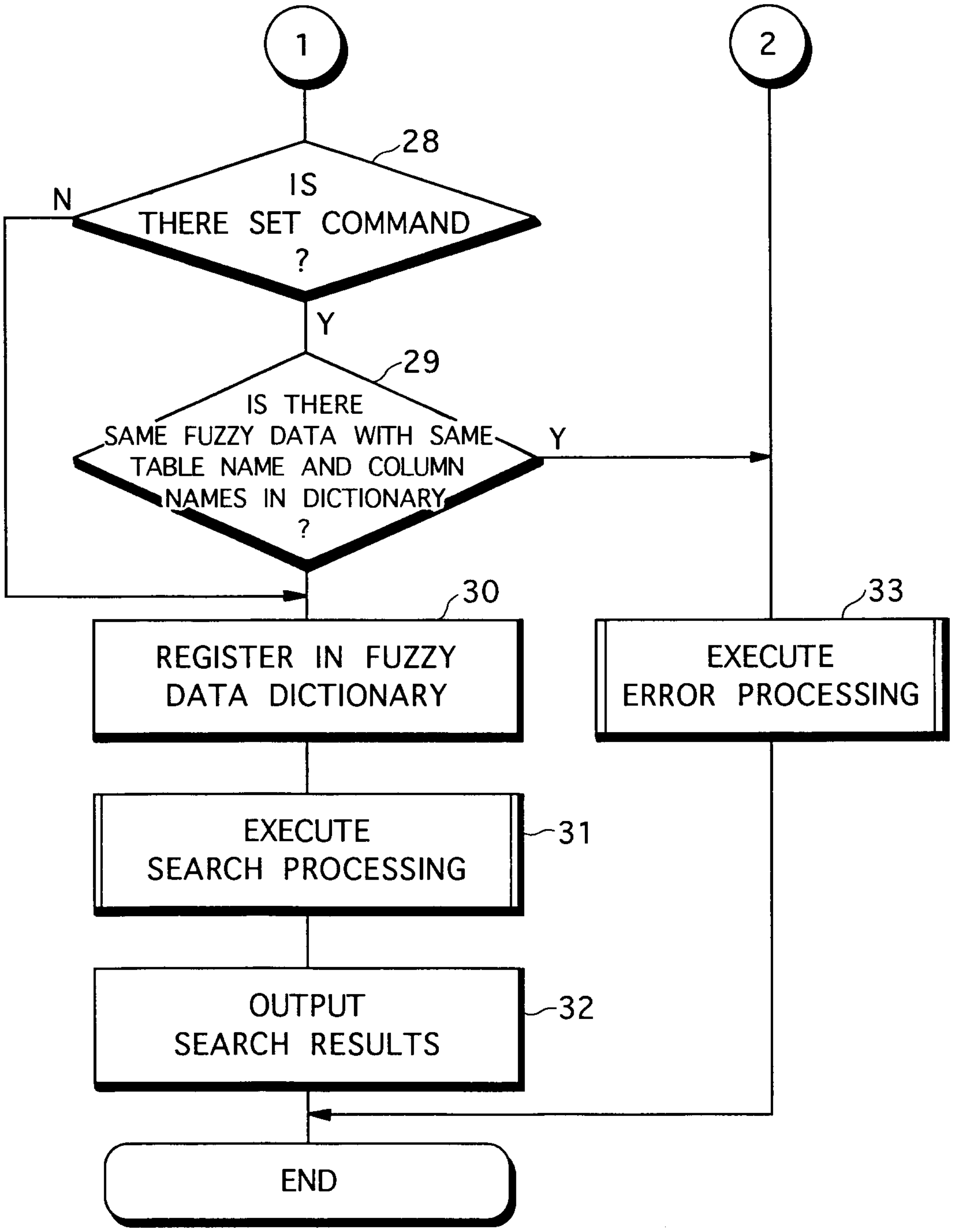
1
2
28
IS THERE SET COMMAND ?
N
Y
29
IS THERE SAME FUZZY DATA WITH SAME TABLE NAME AND COLUMN NAMES IN DICTIONARY ?
Y
30
REGISTER IN FUZZY DATA DICTIONARY
33
EXECUTE ERROR PROCESSING
EXECUTE SEARCH PROCESSING
31
OUTPUT SEARCH RESULTS
32
END

*Fig. 12*

| FUZZY LABEL (FUZZY NUMBER) | x 1 | x 2 | x 3 | x 4 |
|---|---|---|---|---|
| ABOUT 30 YEARS OLD | 28 | 30 | 30 | 45 |
| MIDDLE-AGED | 30 | 35 | 45 | 50 |
| YOUNG | 0 | 0 | 20 | 30 |
| | | | | |
| | | | | |
| | | | | |

Fig. 13

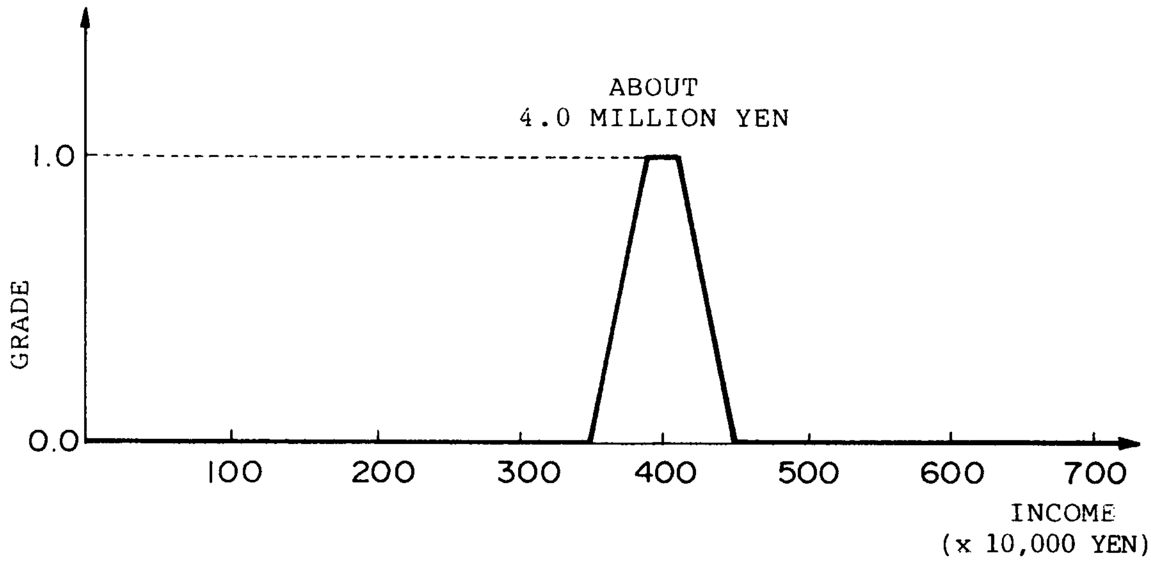
ABOUT
4.0 MILLION YEN
1.0
GRADE
0.0
100
200
300
400
500
600
700
INCOME
(x 10,000 YEN)

Fig. 14

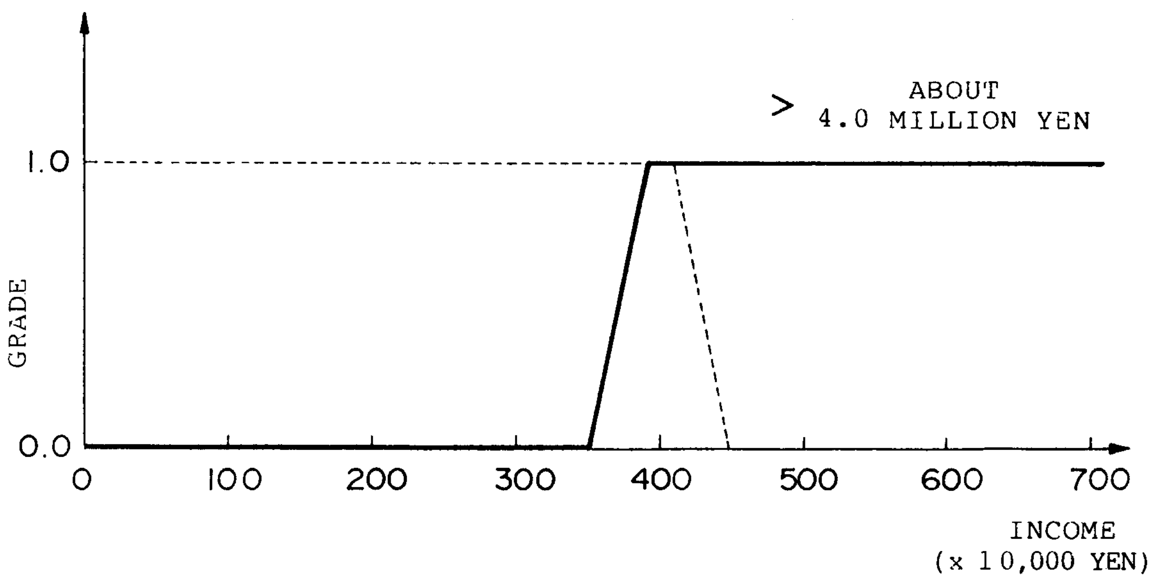
> ABOUT
4.0 MILLION YEN
1.0
GRADE
0.0
0
100
200
300
400
500
600
700
INCOME
(x 10,000 YEN)

*Fig. 15*

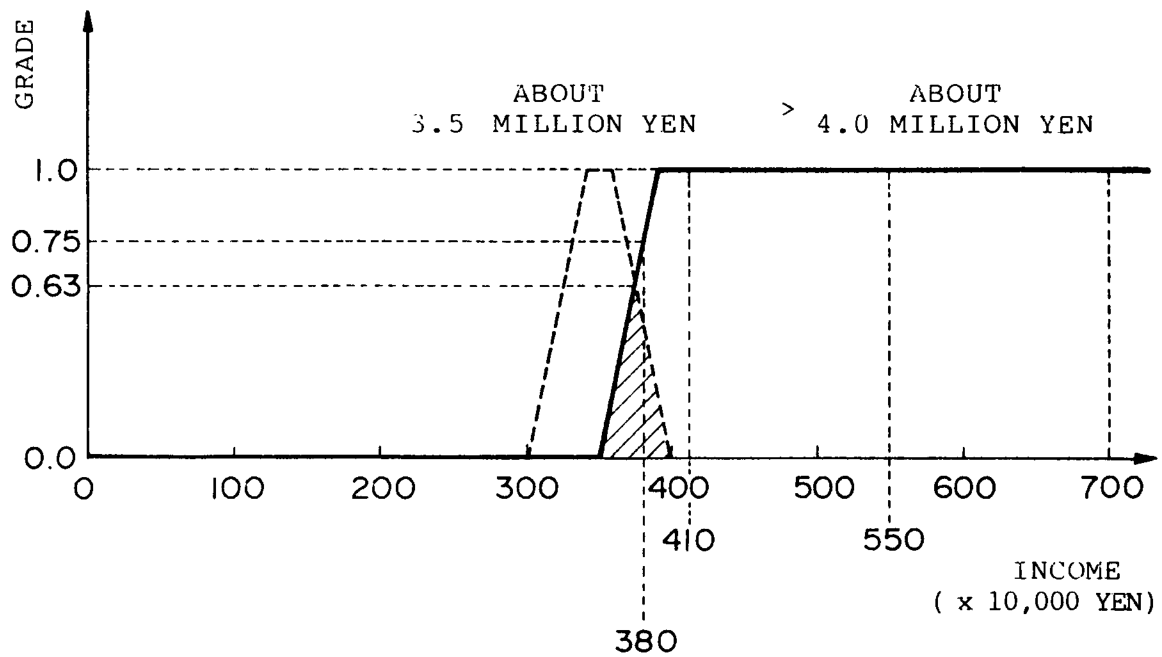
GRADE
ABOUT
3.5 MILLION YEN
>
ABOUT
4.0 MILLION YEN
1.0
0.75
0.63
0.0
0
100
200
300
400
500
600
700
410
550
380
INCOME
( x 10,000 YEN)

Fig.16

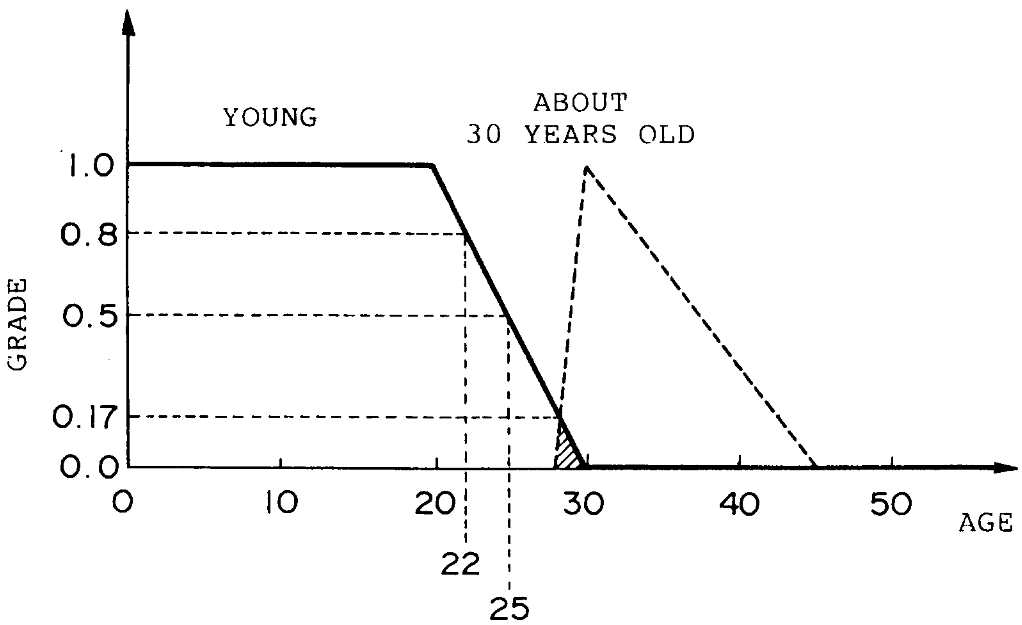
YOUNG
ABOUT
30 YEARS OLD
GRADE
1.0
0.8
0.5
0.17
0.0
0
10
20
30
40
50
AGE
22
25

Fig.17

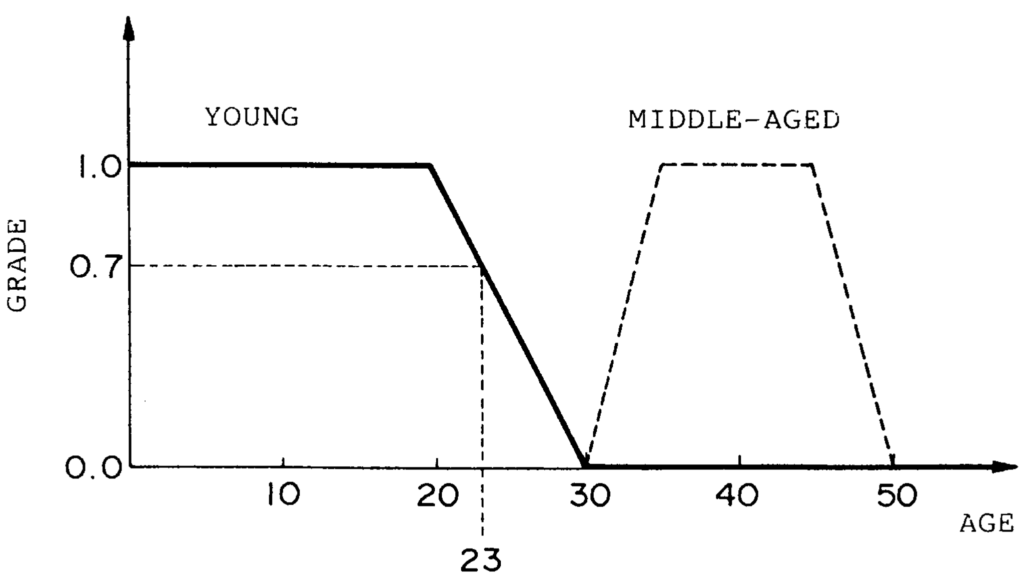
YOUNG
MIDDLE-AGED
GRADE
1.0
0.7
0.0
10
20
30
40
50
AGE
23

*Fig. 18*

| NAME | DEGREE OF MEMBERSHIP OF INCOME > ABOUT 4.0 MILLION YEN | DEGREE OF MEMBERSHIP OF AGE = YOUNG | RESULTS OF MIN OPERATION |
|---|---|---|---|
| AB cd | 0.63 | 0.8 | 0.63 |
| AC de | 1.0 | 0.5 | 0.5 |
| AF ef | 0.75 | 0.7 | 0.7 |
| DA dc | 1.0 | 0.17 | 0.17 |
| FG fg | 1.0 | 0.0 | 0.0 |

# Fig. 19

| NAME | DEGREE OF MEMBERSHIP OF INCOME > ABOUT 4.0 MILLION YEN | DEGREE OF MEMBERSHIP OF AGE = YOUNG | RESULTS OF MIN OPERATION |
|---|---|---|---|
| AF ef | 0.75 | 0.7 | 0.7 |
| AB cd | 0.63 | 0.8 | 0.63 |
| AC de | 1.0 | 0.5 | 0.5 |

## INTERNATIONAL SEARCH REPORT

International application No.
PCT/JP94/01722

**A. CLASSIFICATION OF SUBJECT MATTER**

Int. $Cl^6$ G06F17/30

According to International Patent Classification (IPC) or to both national classification and IPC

**B. FIELDS SEARCHED**

Minimum documentation searched (classification system followed by classification symbols)

Int. $Cl^5$ G06F15/40

Documentation searched other than minimum documentation to the extent that such documents are included in the fields searched

Jitsuyo Shinan Koho 1926 - 1994
Kokai Jitsuyo Shinan Koho 1971 - 1994

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | OMRON TECHNICS Vol. 32, No. 1<br>March 25, 1992 (Tokyo)<br>Hiroshi Kumamoto, Hiroshi Nakajima<br>"On a library which provides the function of fuzzy data base library data registration and the function of fuzzy retrieval"<br>P. 64-69 | 1-22 |
| X | OMRON TECHNICS Vol. 32, No. 3<br>Septemer 30, 1992 (Tokyo)<br>Hiroshi Nakajima "Fuzzy data base language: SQL-On the Specification of the Language and the C Language Library-" | 1-22 |
| A | JP, A, 3-168869 (Matsushita Electric Ind. Co., Ltd.),<br>July 22, 1991 (22. 07. 91),<br>(Family: none) | 1-22 |

☐ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| December 12, 1994 (12. 12. 94) | January 17, 1995 (17. 01. 95) |
| Name and mailing address of the ISA/<br>Japanese Patent Office<br>Facsimile No. | Authorized officer<br><br>Telephone No. |

Form PCT/ISA/210 (second sheet) (July 1992)